# FASCICULE DE BREVET EUROPEEN

(11) **EP 3 034 322 B1**
(45) Date de publication et mention de la délivrance du brevet: **15.05.2019**
(21) Numéro de dépôt: 15200443.8
(22) Date de dépôt: 16.12.2015
(51) Int. Cl.: B60B 7/00, B60B 7/02, B60B 7/14, B60B 7/18

(54) **ROUE PERFECTIONNÉE POUR MACHINES AGRICOLES**
VERBESSERTES RAD FÜR LANDWIRTSCHAFTLISCHE MASCHINEN
IMPROVED WHEEL FOR AGRICULTURAL MACHINES

(30) Priorité: 18.12.2014 FR 1462763
(43) Date de publication de la demande: 22.06.2016
(73) Titulaire: KUHN S.A., 67700 Saverne (FR)
(72) Inventeur: POTIER, Philippe, 67290 ZITTERSHEIM (FR); DAILLY, Aurélien, 67700 SAVERNE (FR); AUDIGIE, Jean-Charles, 67330 BOUXWILLER (FR)
(74) Mandataire: Esch, Esther Evelyne

(56) Documents cités:
- EP-A2- 2 418 099
- CN-B- 104 118 276
- DE-A1- 3 623 909
- DE-A1-102007 042 609
- DE-A1-102011 079 599
- GB-A- 2 259 891

## Description

La présente invention se rapporte au domaine des roues et plus particulièrement à des roues utilisées dans le machinisme agricole. L'invention concerne une roue pour machine agricole comportant un moyeu, un voile supportant une jante et un bandage monté sur la jante, le voile comporte des branches reliant la jante au moyeu et des ouvertures situées entre deux branches adjacentes.

Une roue connue de ce type est décrite dans le document EP 1 671 811 A1**.** La roue comporte une jante interrompue pour constituer plusieurs segments de jantes en forme d'arc de cercle. Les segments de jantes sont mutuellement espacés. La roue comporte un moyeu de roue à partir duquel sont issues cinq branches radiales. Chaque branche est solidaire d'un segment de jantes. Le voile présente d'une part des branches radiales et des ouvertures, ces dernières s'étendent entre deux branches radiales voisines. Une telle roue présente une structure allégée. Un bandage est monté sur la jante, il s'agit d'un bandage caoutchouc avec un renfort annulaire. De telles roues sont utilisées sur des semoirs et ont une fonction de rappuyage du sol ou de contrôle de profondeur. Lors du semis, le voile ajouré d'une roue de jauge a pour avantage d'évacuer la terre et permet d'éviter l'accumulation de terre entre la roue et le disque ouvreur. Par contre, l'utilisation d'une telle roue ajourée n'est pas recommandée en présence de pierres et de résidus végétaux puisqu'elle est sujette au blocage par les pierres et les résidus. La roue de jauge peut même empêcher la rotation du disque ouvreur et donc un placement des graines non optimal puisque le sillon n'est plus formé.

Une autre roue de ce genre est décrite dans le document US 7 584 706 B1**.** Il s'agit d'une roue de jauge pour un semoir monograine. Cette roue comporte un moyeu, un voile avec des branches et une jante. Le voile est lié au moyeu et à la jante à l'aide de moyens de fixation. La roue de jauge peut être adaptée en fonction des conditions du terrain avec ou sans débris, en proposant un voile démontable. Le remplacement du voile d'une roue de jauge nécessite le démontage de tous les moyens de fixation puis leur serrage. Un semoir monograine dispose généralement de quatre, à plus de quarante, éléments semeurs et chaque élément semeur dispose de deux roues de jauge. Une intervention pour remplacer les voiles ajourés par des voiles conventionnels ou inversement est donc coûteuse en temps.

Les documents DE 10 2007 042 609 et GB 2 259 891 divulguent chacun un modèle de roue pour l'automobile. Le document EP 2 418 099 divulgue une roue avec un dispositif d'obturation composée d'un bandage caoutchouc increvable monté sur une jante avec un voile ajouré. Les ouvertures ménagées dans le voile permettent le refroidissement des freins et ne peuvent donc pas être obturées.

L'objet de la présente invention vise donc à s'affranchir des inconvénients rencontrés dans l'état de la technique. Elle doit notamment proposer une roue avec un voile ajouré qui peut être utilisée de manière universelle, que les conditions soient faciles avec des sols secs et/ou sableux ou que les conditions soient difficiles avec des sols humides et/ou en présence de cailloux. L'invention vise à augmenter la plage d'utilisation d'une machine agricole, en limitant les périodes de non-utilisation du fait de roues non adaptées aux conditions.

A cet effet, l'invention a pour objet une roue pour machine agricole comportant un moyeu, un voile supportant une jante et un bandage monté sur la jante, le voile comportant des branches reliant la jante au moyeu et des ouvertures situées entre deux branches adjacentes, la roue comporte un dispositif pour obturer au moins une des ouvertures caractérisé en ce qu'un dispositif d'obturation comporte une face interne présentant au moins une saillie, au moins une partie de la face interne est destinée à être appuyée contre le voile lorsque le dispositif d'obturation est monté sur la roue et la forme de la saillie correspond à la forme de l'ouverture située entre les branches. Ainsi, l'une des ouvertures peut être bouchée pour réduire le risque d'accumulation de débris végétaux entre les branches. Lorsque le nombre d'ouvertures dans le voile est réduit, le risque d'accumulation de débris végétaux est également limité. Avec un dispositif d'obturation selon l'invention, le risque d'invasion externe de pierres et débris végétaux est donc réduit voire annulé.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de côté d'un élément semeur avec une roue équipée d'un dispositif d'obturation selon l'invention,
- la **figure 2** représente une vue de détail de la roue selon l'invention,
- la **figure 3** représente une vue en coupe de la roue de la figure 1,
- la **figure 4** est une vue éclatée de la roue avec le dispositif d'obturation,
- la **figure 5** représente une vue de la face externe du dispositif d'obturation, la face interne est représentée en traits discontinus.

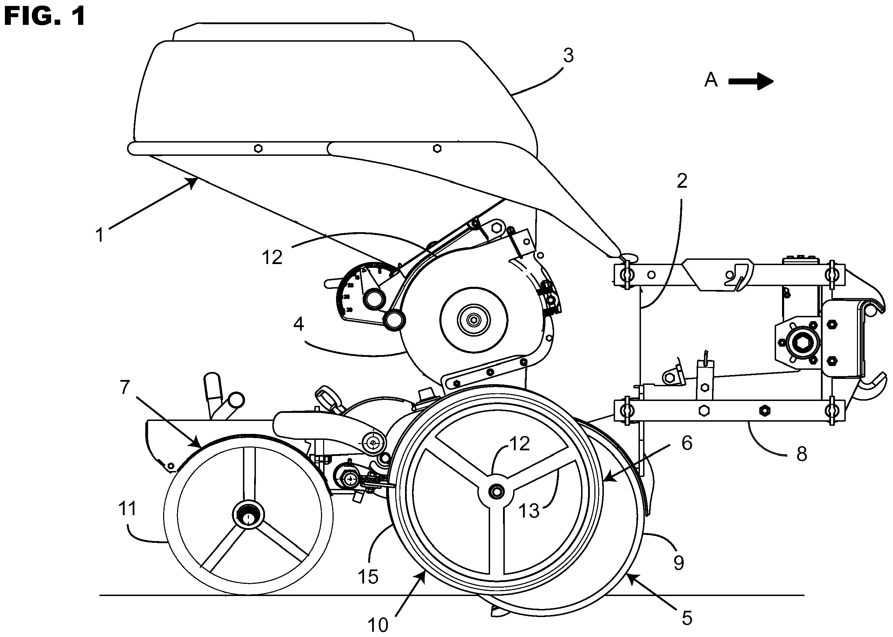

La figure 1 représente un élément semeur (1) destiné à être monté sur le châssis d'un semoir monograine. Un tel semoir monograine travaille sur plusieurs rangées, les éléments semeurs (1) sont répartis sur le châssis (2) sensiblement horizontalement et perpendiculairement à la direction d'avance au travail (A). Dans la suite de la description, les notions "avant" et "arrière" sont définies par rapport au sens d'avance (A). D'après la figure 1, l'élément semeur (1) possède une trémie (3), un boîtier de distribution (4), un dispositif d'enterrage (5), un dispositif de contrôle de profondeur (6) et un dispositif de fermeture (7). Chaque élément semeur (1) est monté respectivement sur le châssis (2) au moyen d'un parallélogramme déformable (8), lequel permet à l'élément semeur (1) de rester parallèle au sol en toutes positions. La trémie (3) constitue la réserve de graines destinée à alimenter le boîtier de distribution (4). Le boîtier de distribution (4) a pour rôle d'extraire une à une les graines d'une trémie (3) et de les répartir à intervalle constant sur la ligne de semis. En sortie du boîtier de distribution (4), les graines sont transportées vers le dispositif d'enterrage (5) pour être mise en terre. Le dispositif d'enterrage (5) crée un sillon à une profondeur déterminée pour y placer la graine. La profondeur de semis est donnée par le dispositif de contrôle de profondeur (6). Il est disposé latéralement par rapport au point de chute des graines pour permettre au dispositif d'enterrage (5) de suivre les dénivellations du sol sans décalage. Le dispositif de fermeture (7) assure la fermeture du sillon. Il s'étend derrière le dispositif de contrôle de profondeur (6), compte tenu de la direction d'avance (A).

Dans l'exemple représenté, le dispositif d'enterrage (5) est composé de deux disques d'ouverture (9) et le dispositif de contrôle de profondeur (6) est réalisé par une roue (10), cette roue est aussi appelée roue de jauge. D'une manière avantageuse, une roue (10) est associée à chacun des disques d'ouverture (9). La roue (10) est placée latéralement sur le disque d'ouverture (9). De préférence, la position latérale de la roue (10) est telle que son point de contact avec le sol est aligné, en vue de côté, avec l'endroit où la graine va tomber au sol. Ainsi, les disques d'ouverture (9) peuvent suivre, sans décalage, toutes les dénivellations du sol et garantir une profondeur de semis régulière. Le dispositif de fermeture (7) comporte au moins une roue de rappuyage (11) qui tasse le sillon.

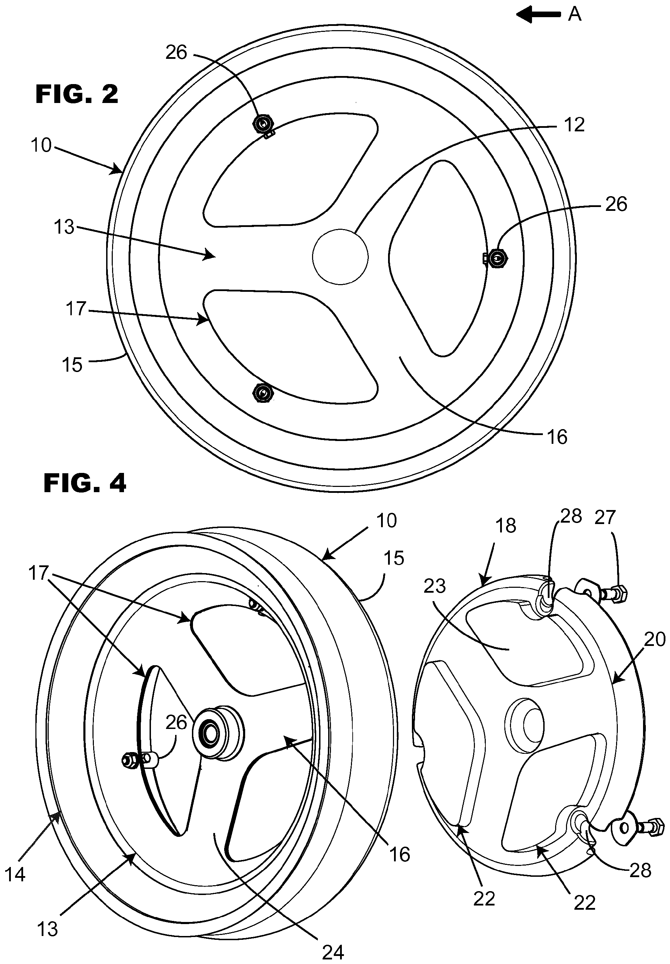

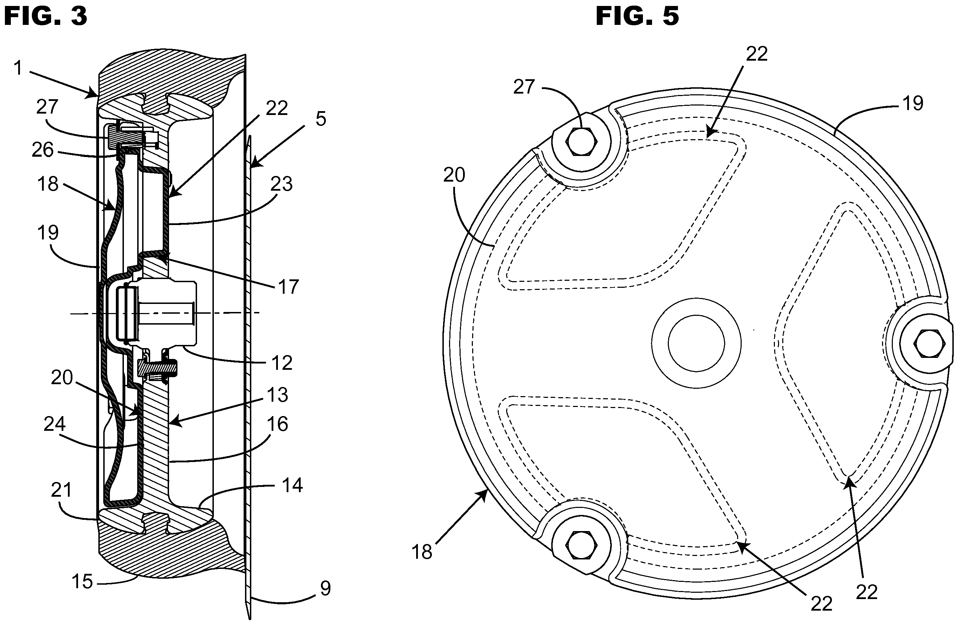

D'après la figure 2, la roue (10) comporte un moyeu (12), un voile (13), une jante (14) et un bandage (15). Le moyeu (12) est la partie centrale de la roue (10). Le voile (13) supporte la jante (14) sur laquelle est monté le bandage (15). Le voile (13) est disposé avec un déport ou un déport nul par rapport à la jante (14). Dans l'exemple représenté, le bandage (15) est un bandage en caoutchouc. Il peut être plein ou creux. Le bandage caoutchouc représenté sur la figure 3 est destiné à s'appuyer contre au moins une partie du disque d'ouverture (9). A cet effet, il comporte un profil à lèvre dont le but est notamment de nettoyer le disque d'ouverture (9). Le voile (13) comporte des branches (16) et des ouvertures (17). Les branches (16) relient la jante (14) au moyeu (12) et les ouvertures (17) sont situées entre deux branches (16) adjacentes. Il s'agit donc d'un voile ajouré. Dans l'exemple de réalisation, le voile (13) de la roue (10) présente trois branches (16) et trois ouvertures (17). Une telle roue (10) avec un voile (13) à trois branches (16) est capable d'évacuer la terre en évitant qu'elle s'accumule entre le disque d'ouverture (9) et la roue (10). Dans un autre exemple de réalisation, le bandage (15) est en acier, une telle roue est souvent utilisée comme roue de rappuyage.

Selon une importante caractéristique de l'invention, la roue (10) comporte un dispositif (18) pour obturer au moins une des ouvertures (17). Grâce à cette caractéristique, l'une des ouvertures (17) pourra être bouchée pour réduire le risque d'accumulation de débris végétaux entre les branches (16). Lorsque le nombre d'ouvertures (17) dans le voile (13) est réduit, le risque d'accumulation de débris végétaux est également limité. Le dispositif d'obturation (18) est placé du côté opposé au disque d'ouverture (9). Le dispositif d'obturation (18) est inséré dans l'une au moins des ouvertures (17). Il est maintenu dans un système de fixation approprié qui rend le dispositif d'obturation (18) solidaire de l'une au moins des ouvertures (17). Un tel système de fixation est par exemple un assemblage du type vis-écrou. Dans un autre exemple, le système de fixation est un assemblage par emboîtage. Dans une alternative, le dispositif d'obturation (18) est superposé ou pivoté sur l'une au moins des ouvertures (17). D'une manière alternative, le dispositif d'obturation (18) bouche au moins deux ouvertures (17).

Selon une autre caractéristique importante, le dispositif d'obturation (18) est destiné à être monté et/ou démonté sans démonter la roue (10). Le démontage du dispositif d'obturation (18) ne nécessite aucune intervention sur la roue (10). Il n'est pas nécessaire de démonter le voile (13), la jante (14) ou même le bandage (15). Ainsi une intervention pour mettre en place ou enlever le dispositif d'obturation (18) est simple et rapide. L'adaptation de la roue (10) aux conditions de travail est donc aisée puisque les ouvertures (17) du voile (13) peuvent rapidement être obturées.

A la lumière de la figure 3, on peut voir que le voile (13) est plan et son déport est nul par rapport à la jante (14). On dit aussi que le voile (13) est centré par rapport à la jante (14). Les branches (16) sont donc sensiblement parallèles au plan vertical médian de la roue (10). Le dispositif d'obturation (18) dispose d'une face externe (19) et d'une face interne (20). La face externe (19) est sensiblement alignée avec le bord (21) du bandage (15) lorsque le dispositif d'obturation (18) est monté sur la roue (10). Cette face externe (19) recouvre toute la surface du voile (13). La face interne (20) est destinée à s'appuyer sur les branches (16) du voile (13). La face interne (20) est sensiblement plane et comporte au moins une saillie (22). De préférence, le nombre de saillie (22) correspond au nombre d'ouvertures (17). La saillie (22) présente une forme correspondante à la forme de l'ouverture (17) dans laquelle elle est insérée. L'épaisseur de la saillie (22) correspond à au moins l'épaisseur des branches (16) adjacentes. Au moins une partie de la face interne (20) est adjacente au voile (13), lorsque le dispositif d'obturation (18) est monté sur la roue (10), et la face débordante (23) des saillies (22) est sensiblement alignée avec la surface interne (24) du voile (13). La face externe (19) est située à l'opposé de la face interne (20). La face externe (19) présente un profil favorable à l'évacuation de terre lors de la rotation de la roue (10).

La figure 4 représente une vue éclatée de la roue (10) et d'un dispositif d'obturation (18) conforme à l'invention. Le dispositif d'obturation (18) est destiné à boucher toutes les ouvertures (17) du voile (13). De cette façon, la roue (10) ne comporte plus d'ouvertures (17) et pourra ainsi être utilisée dans des terrains avec des pierres et des résidus végétaux. Pour cela, le voile (13) comporte trois points d'appui (26) répartis sur le pourtour du voile (13) et/ou sur la jante (14), c'est-à-dire radialement au-delà des branches (16). Ces points d'appui (26) réalisent d'une part un appui pour la face interne (20) du dispositif d'obturation (18) et d'autre part permettent la fixation du dispositif d'obturation (18) sur le voile (13). Les points d'appui (26) sont préférentiellement en saillie sur le voile (13) et/ou comportent une extrémité plate. Les points d'appui (26) peuvent par exemple prendre la forme de pièces cylindriques et être pourvues d'un alésage tel qu'illustré en figure 4. Le dispositif d'obturation (18) présente une forme généralement circulaire. Des évidements (28) ayant une forme correspondant aux points d'appui (26) sont ménagés en creux sur le pourtour circulaire du dispositif d'obturation (18). La fixation est réalisée via trois vis (27). Lorsque le dispositif d'obturation (18) est monté sur le voile (13), les saillies (22) sont insérées dans les ouvertures (17), et, les points d'appui (26) sont logés dans les évidements (28). Pour le montage ainsi que pour le démontage, il suffit d'intervenir sur les trois vis (27). Avantageusement, la correspondance de forme entre les points d'appui (26) et les évidements (28) facilite le positionnement autour de l'axe général de la roue (10) et bloque le dispositif d'obturation (18) en rotation, c'est-à-dire forment dispositifs anti-rotation.

De préférence, lorsque le dispositif (18) est monté sur le voile (13), il recouvre le moyeu (12). Le moyeu (12) est ainsi protégé de toute invasion de pierres et de débris végétaux.

Dans une alternative non représentée, le voile (13) n'est pas plan. La partie centrale des branches (16) est par exemple décalée par rapport à la partie extérieure des branches (16). Les saillies (22) du dispositif d'obturation (18) viennent compléter le profil circulaire du voile (13) dans sa forme.

La roue (10) décrite est utilisée en tant que roue de jauge, elle est destinée à être montée sur un élément semeur (1). Un tel élément semeur (1) est monté sur une machine agricole, telle qu'un semoir de précision ou monograine. Un tel semoir distribue les graines une à une sur la ligne de semis à des écartements constants. Le nombre d'éléments semeurs (1) correspond au nombre de rangs de semis. Les éléments semeurs (1) sont répartis de manière régulière ou irrégulière sur le châssis (2). Le châssis (2) du semoir repose sur le sol, au travail, via des roues (non représentées). Une telle roue d'appui peut être pourvue d'un voile muni d'ouvertures. Ces ouvertures pouvant être bouchées individuellement ou collectivement par un dispositif d'obturation selon l'invention.

La roue de rappuyage, qui a pour but de fermer le sillon après que les graines soient implantées, peut également être conçue avec un voile ajouré. Un dispositif d'obturation conforme à l'invention permettra comme décrit précédemment de boucher l'une au moins des ouvertures du voile ajouré. La roue de rappuyage peut être utilisée seule ou par paire sur un semoir.

Une machine agricole pour la préparation et le travail du sol pourra également être munie d'une roue ajourée et d'un dispositif d'obturation selon l'invention. La machine agricole pourra également être une charrue.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini dans les revendications.

## Revendications

1. Roue (10) pour machine agricole comportant un moyeu (12), un voile (13) supportant une jante (14) et un bandage (15) monté sur la jante (14), le voile (13) comportant des branches (16) reliant la jante (14) au moyeu (12) et des ouvertures (17) situées entre deux branches (16) adjacentes, la roue (10) comporte un dispositif (18) pour obturer au moins une des ouvertures (17), ***caractérisée en ce que*** le dispositif d'obturation (18) comporte une face interne (20) présentant au moins une saillie (22), au moins une partie de la face interne (20) est destinée à être appuyée contre le voile (13) lorsque le dispositif d'obturation (18) est monté sur la roue (10) et la forme de la saillie (22) correspond à la forme de l'ouverture (17) située entre les branches (16).

2. Roue selon la revendication 1, ***caractérisée en ce que*** le dispositif d'obturation (18) est destiné à être monté et/ou démonté sans démonter la roue (10).

3. Roue selon la revendication 2, ***caractérisée en ce que*** l'épaisseur de la saillie (22) est au moins égale à l'épaisseur des branches (16) adjacentes.

4. Roue selon l'une quelconque des revendications 1 à 3, ***caractérisée en ce que*** le dispositif d'obturation (18) est inséré, superposé ou pivoté sur au moins une ouverture (17) du voile (13).

5. Roue selon l'une quelconque des revendications 1 à 4, ***caractérisée en ce que*** le dispositif d'obturation (18) bouche au moins deux ouvertures (17).

6. Roue selon l'une quelconque des revendications 1 à 5, ***caractérisée en ce que*** le voile (13) comporte trois points d'appui (26) répartis sur le pourtour, ces trois points d'appui (26) permettent la fixation du dispositif d'obturation (18) sur la roue (10).

7. Roue selon la revendication 6, ***caractérisée en ce que*** les trois points d'appui (26) sont prévus sur la jante (14).

8. Roue selon la revendication 7, ***caractérisée en ce que*** les trois points d'appui (26) forment dispositifs anti-rotation.

9. Roue selon l'une quelconque des revendications précédentes, ***caractérisée en ce que*** le dispositif d'obturation (18) comporte une face externe (19) sensiblement plane, la face externe (19) est située à l'opposé de la face interne (20).

10. Roue selon l'une quelconque des revendications précédentes, ***caractérisée en ce* qu'**il s'agit d'une roue de jauge, d'une roue de rappuyage ou d'une roue d'appui au sol.

11. Roue selon l'une quelconque des revendications précédentes, ***caractérisée en ce* que** le dispositif d'obturation (18) recouvre le moyeu (12).

12. Machine agricole comportant au moins une roue (10) selon l'une quelconque des revendications précédentes.

13. Machine agricole selon la revendication précédente, ***caractérisée en ce* qu'**il s'agit d'un semoir.

## Patentansprüche

1. Rad (10) für landwirtschaftliche Maschine mit einer Nabe (12), einer Radscheibe (13), die eine Felge (14) und einen auf die Felge (14) montierten Reifen (15) trägt, wobei die Radscheibe (13) die Felge (14) mit der Nabe (12) verbindende Arme (16) und zwischen zwei benachbarten Armen liegende Öffnungen (17) aufweist, das Rad (10) weist eine Vorrichtung (18) zum Verschluss mindestens einer der Öffnungen (17) auf, ***dadurch gekennzeichnet,* dass** die Verschlussvorrichtung eine innere Seite (20) mit mindestens einem Vorsprung (22) aufweist, wobei mindestens ein Teil der inneren Seite (20) dazu bestimmt ist, gegen die Radscheibe (13) gedrückt zu werden, wenn die Verschlussvorrichtung (18) an dem Rad (10) angebracht ist und die Form des Vorsprungs (22) der zwischen den Arme (16) liegende Öffnung (17) entspricht.

2. Rad nach Anspruch 1, ***dadurch gekennzeichnet,* dass** die Verschlussvorrichtung (18) dazu bestimmt ist, ohne das Rad (10) abzubauen, angebracht und/oder abgebaut zu werden.

3. Rad nach Anspruch 2, ***dadurch gekennzeichnet,* dass** die Dicke des Vorsprungs (22) mindestens gleich der Dicke der benachbarten Arme (16) ist.

4. Rad nach irgend einem der Ansprüche 1 bis 3, ***dadurch gekennzeichnet,* dass** die Verschlussvorrichtung (18) in mindestens einer der Öffnungen (17) der Radscheibe (13) eingefügt ist, darüber gelagert oder geschwenkt ist.

5. Rad nach irgend einem der Ansprüche 1 bis 4, ***dadurch gekennzeichnet,* dass** die Verschlussvorrichtung (18) mindestens zwei Öffnungen (17) schliesst.

6. Rad nach irgend einem der Ansprüche 1 bis 5, ***dadurch gekennzeichnet,* dass** die Radscheibe (13) drei auf dem Umgang verteilte Stützpunkte (26) aufweist, wobei diese drei Stützpunkte (26) die Befestigung der Verschlussvorrichtung (18) an dem Rad (10) gestatten.

7. Rad nach Anspruch 6, ***dadurch gekennzeichnet,* dass** die drei Stützpunkte (26) auf der Felge (14) vorgesehen sind.

8. Rad nach Anspruch 7, ***dadurch gekennzeichnet,* dass** die drei Stützpunkte (26) Gegendrehungvorrichtungen bilden.

9. Rad nach irgend einem der vorhergehenden Ansprüchen, ***dadurch gekennzeichnet,* dass** die Verschlussvorrichtung (18) eine im wesentlichen flache äussere Seite (19) aufweist, die äussere Seite (19) liegt gegenüber der inneren Seite (20).

10. Rad nach irgend einem der vorhergehenden Ansprüchen, ***dadurch gekennzeichnet,* dass** es sich um ein Tiefenführungsrad, ein Andruckrad oder ein sich auf dem Boden abstützendes Rad handelt.

11. Rad nach irgend einem der vorhergehenden Ansprüchen, ***dadurch gekennzeichnet,* dass** die Verschlussvorrichtung (18) die Nabe (12) abdeckt.

12. Landwirtschaftliche Maschine mit mindestens einem Rad (10) nach irgend einem der vorhergehenden Ansprüchen.

13. Landwirtschaftliche Maschine nach dem vorhergende Anspruch, ***dadurch gekennzeichnet,* dass** es sich um eine Sämaschine handelt.

## Claims

1. Wheel (10) for an agricultural machine including a hub (12), a disc (13) supporting a rim (14) and a tyre (15) mounted on the rim (14), the disc (13) including legs (16) connecting the rim (14) to the hub (12) and openings (17) positioned between two adjacent legs (16), the wheel (10) including a device (18) to seal at least one of the openings (17), ***characterised in that*** the sealing device (18) includes an inner face (20) having at least one projection (22), at least one part of the inner face (20) being designed to rest against the disc (13) when the sealing device (18) is mounted on the wheel (10) and the shape of the projection (22) matching the shape of the opening (17) located between the legs (16).

2. Wheel according to claim 1, ***characterised in that*** the sealing device (18) is designed to be mounted and/or removed without removing the wheel (10).

3. Wheel according to claim 2, ***characterised in that*** the thickness of the projection (22) is at least equal to the thickness of the adjacent legs (16).

4. Wheel according to any one of the claims 1 to 3, ***characterised in that*** the sealing device (18) is inserted, laid over or pivots around at least one opening (17) of the disc (13).

5. Wheel according to any one of the claims 1 to 4, ***characterised in that*** the sealing device (18) blocks at least two openings (17).

6. Wheel according to any one of the claims 1 to 5, ***characterised in that*** the disc (13) includes three link points (26) distributed on the circumference, these three link points (26) enabling the sealing device (18) to be fastened to the wheel (10).

7. Wheel according to claim 6, ***characterised in that*** the three link points (26) are positioned on the rim (14).

8. Wheel according to claim 7, ***characterised in that*** the three link points (26) form anti-rotation devices.

9. Wheel according to any one of the previous claims, ***characterised in that*** the sealing device (18) includes a substantially flat outer face (19), the outer face (19) being situated opposite the inner face (20).

10. Wheel according to any one of the previous claims, ***characterised in that*** it is a gauge wheel, a tamping wheel or a soil-resting wheel.

11. Wheel according to any one of the previous claims, ***characterised in that*** the sealing device (18) covers the hub (12).

12. Agricultural machine including at least one wheel (10) according to any one of the previous claims.

13. Agriculture machine according to the previous claim, ***characterised in that*** it is a seed drill.
